# EUROPÄISCHE PATENTSCHRIFT

(11) **EP 1 367 307 B1**
(45) Veröffentlichungstag und Bekanntmachung des Hinweises auf die Patenterteilung: **21.07.2004**
(21) Anmeldenummer: 02012020.0
(22) Anmeldetag: 31.05.2002
(51) Int. Cl.: F16K 31/00

(54) **Piezoventil**
Piezo-electric valve
Soupape piezo-électrique

(43) Veröffentlichungstag der Anmeldung: 03.12.2003
(73) Patentinhaber: FESTO AG & Co, 73734 Esslingen (DE)
(72) Erfinder: Maichl, Martin, 73084 Salach (DE); Hoffmann, Markus, 72649 Wolfsschlugen (DE); Munz, Gebhardt, 73614 Schomdorf (DE); Weinmann, Michael, 73655 Plüderhausen (DE); Schmid, Andreas, 96247 Michelau (DE); Klump, Stefan, 98215 Lichtenfels (DE); Riedel, Michael, 96472 Rödental (DE); Seslak, Jürgen, 96215 Lichtenfels (DE); Töpfer, Udo, 96247 Michelau (DE); Krämer, Hubert, 96349 Steinwiesen (DE); Pöhlau, Frank, Dr., 90762 Fürth (DE); Eberhardt, Wolfgang, Dr., 70597 Stuttgart (DE); Kück, Heinz, Dr., 70437 Stuttgart (DE); Pein, Carsten, 71563 Affalterbach (DE)
(74) Vertreter: Abel, Martin, Dipl.-Ing.

(56) Entgegenhaltungen:
- EP-A- 1 158 182
- US-A- 5 628 411
- BELFORTE G ET AL: "VALVOLE PNEUMATICHE COMMERCIALI CON AZIONAMENTO PIEZOELETRICO" OLEODINAMICA, PNEUMATICA, TECNICHE NUOVE. MILANO, IT, Bd. 41, Nr. 3, März 2000 (2000-03), Seiten 240-251, XP000930874 ISSN: 1122-5017

## Beschreibung

Die Erfindung betrifft ein Piezoventil, mit einem Ventilgehäuse, das eine Ventilkammer definiert, die mindestens ein Betätigungsglied in Gestalt eines Piezo-Biegewandlers enthält, dem für seine elektrische Kontaktierung mindestens eine einer Außenwand des Ventilgehäuses zugewandte Kontaktfläche zugeordnet ist.

Bei einem aus der EP 1158182 A1 bekannten Piezoventil dieser Art erfolgt die elektrische Kontaktierung des Piezo-Biegewandlers durch elektrische Verbindungsleiter, die im Innern der Ventilkammer an die am Piezo-Biegewandler vorgesehenen Kontaktflächen angelötet sind und die andererseits mit elektrischen Anschlusskontakten verbunden sind, die durch eine Seitenwand des Ventilgehäuses nach außen treten. Diese Kontaktierungsmaßnahmen sind relativ umständlich. Zudem kann eine eventuell wünschenswerte Ansteuerelektronik nicht ohne weiteres an dem Piezoventil installiert werden.

Es ist daher die Aufgabe der vorliegenden Erfindung, ein Piezoventil der eingangs genannten Art zu schaffen, das insbesondere in elektrischer Hinsicht so ausgebildet ist, dass es eine einfachere Montage gestattet.

Zur Lösung dieser Aufgabe ist vorgesehen, dass die besagte Außenwand des Ventilgehäuses als Verdrahtungsträger ausgebildet ist, der einen aus Kunststoffmaterial bestehenden Trägerkörper aufweist, der an der der Ventilkammer entgegengesetzten Außenseite eine für die elektrische Ansteuerung des Piezo-Biegewandlers vorgesehene, über elektrische Leiter und/oder Elektronikkomponenten verfügende Verdrahtungsanordnung trägt, die über mindestens eine eine Durchbrechung des Trägerkörpers durchsetzende Durchkontaktierung mit dem Piezo-Biegewandler elektrisch kontaktiert ist, indem die Durchkontaktierung aus einem elektrisch leitfähigen Elastikpfropf besteht, gegen den die dem Piezo-Biegewandler zugeordnete mindestens eine Kontaktfläche im Bereich der Innenseite des Trägerkörpers angepresst ist.

Die für die Ansteuerung des Piezo-Biegewandlers vorgesehene Verdrahtungsanordnung befindet sich hier, getrennt vom Betriebsmedium des Piezoventils, außerhalb der Ventilkammer und ist somit vor eventuellen Beeinträchtigungen durch das Betriebsfluid gefeit. Die elektrische Kontaktierung des Piezo-Biegewandlers übernimmt mindestens eine den Trägerkörper durchsetzende Durchkontaktierung, die als elektrisch leitfähiger Elastikpfropf ausgebildet ist, der außer der elektrischen Leitfunktion unmittelbar auch eine Kontaktierungsfunktion übernimmt, indem er durch Berührkontakt die dem Piezo-Biegewandler zugeordnete Kontaktfläche, insbesondere im Innern der Ventilkammer, elektrisch kontaktiert. Auf Grund der gummielastischen Eigenschaften des Elastikpfropfes, gegen den die Kontaktfläche angepresst ist, und die daraus resultierenden Rückstellkräfte, ergibt eine sehr sichere elektrische Verbindung. Außerdem schafft die Gummielastizität des Elastikpfropfes einen weiträumigen Toleranzausgleich in Bezug auf die Bauteiltoleranzen des Piezoventils. Nicht zuletzt kann der Elastikpfropf bei entsprechender Ausgestaltung auch in der Lage sein, eine fluiddichte Abdichtung der von ihm durchsetzten Durchbrechung zu gewährleisten, so dass durch diese hindurch kein Fluid aus dem Ventilinnern nach außen entweichen kann. Insgesamt ermöglicht die erfindungsgemäße Ausgestaltung einen relativ einfachen Aufbau und eine kostengünstige Montage, wobei die Verdrahtungsanordnung bei Bedarf auch als Ansteuerelektronik für den mindestens einen Piezo-Biegewandler ausgestaltet sein kann, ohne den montagetechnischen Aufwand zu vergrößern.

Vorteilhafte Weiterbildungen der Erfindung gehen aus den Unteransprüchen hervor.

Bei der mit der Verdrahtungsanordnung ausgestatteten, als Verdrahtungsträger ausgebildeten Außenwand handelt es sich zweckmäßigerweise um einen Deckel des Ventilgehäuses. Bei der Montage besteht die Möglichkeit, zunächst die andere Ventilgehäusekomponente mit dem Piezo-Biegewandler auszurüsten und anschließend die Fertigmontage durch einfaches Ansetzen des Deckels zu realisieren.

Bei dem Elastikpfropf handelt es sich vorzugsweise um einen elektrisch leitfähigen Elastomer- oder Gummikörper, der zweckmäßigerweise aus gummielastischem Material besteht, in das für die elektrische Leitfähigkeit verantwortliche Partikel eingebettet sind. Die elektrisch leitfähigen Partikel sind insbesondere Metallpartikel oder metallisierte Kunststoffpartikel.

Bei der Herstellung des Piezoventils kann der Elastikpfropf als vorgefertigter Elastikkörper in die betreffende Durchbrechung eingesetzt werden. Vor allem im Hinblick auf eine optimale Abdichtung wird es jedoch als vorteilhafter angesehen, den Elastikpfropf in Form von flüssigem oder pastösem Material in die Durchbrechung einzuspeisen und anschließend, zum Erhalt der gewünschten gummielastischen Eigenschaften, aus-' härten zu lassen. Hier kann sich das elastische Material optimal an die Wandung der Durchbrechung des Trägerkörpers anschmiegen.

Ein optimaler Toleranzausgleich kann erwartet werden, wenn der Elastikpfropf zur Kontaktierung mit der zugeordneten Kontaktfläche über einen an der Innenseite über den Trägerkörper vorstehenden Kontaktierungskopf verfügt. Dieser bumpartige Kontaktierungskopf besitzt zweckmäßigerweise einen im Vergleich zur Durchbrechung größeren Querschnitt, so dass er den Trägerkörper am Rand der Durchbrechung formschlüssig übergreift. Dies bewirkt eine zusätzliche formschlüssige Sicherung des Elastikpfropfes bei im Innern des Ventils auftretenden hohen Drücken.

Der Trägerkörper ist zusammen mit zumindest Teilen der Verdrahtungsanordnung bevorzugt als MID-Körper ("Molded Interconnect Device") ausgebildet. In diesem Zusammenhang eröffnet sich die vorteilhafte Möglichkeit, die Verdrahtungsanordnung mit elektrischen Leitern auszustatten, die in Heißprägetechnik als Leiterbahnstrukturen auf dem Trägerkörper aufgebracht werden.

Zwar ist es im Zusammenhang mit Ventilen bereits bekannt, auf MID-Strukturen zurückzugreifen. So zeigt beispielsweise die DE 19722925 C1 ein Anschlusselement für Elektromagnete von Ventileinheiten, das einen Trägerkörper aufweist, der von der einen zur anderen Seite mehrfach durchkontaktiert ist. Die Durchkontaktierungen sind hier allerdings von üblichen Leiterbahnen gebildet, die im Rahmen umständlicher nasschemischer Metallisierungsprozesse eingebracht werden. Ferner zeigt die DE 19921659 A1 eine Mikroventilanordnung mit integriertem Verdrahtungsträger, der elektrische Leiter und auch Elektronikkomponenten aufweist. Die Verdrahtungsanordnung befindet sich allerdings im Innern des Ventilgehäuses der Mikroventilanordnung und auch Durchkontaktierungen in Gestalt gummielastischer Körper sind nicht vorhanden.

Eine optimale elektrische Verbindung zwischen dem Elastikpfropf und den elektrischen Leitern der Verdrahtungsanordnung ergibt sich, wenn die Leiterbahnstruktur einen mit der zugeordneten Durchbrechung fluchtenden Kontaktierungsdurchgang besitzt, der von einem von umgebogenen Abschnitten der Leiterbahnstruktur gebildeten und koaxial in die Durchbrechung hineinragenden rohrstutzenartigen Kontaktierungsvorsprung definiert ist, der von dem elektrisch leitfähigen Elastikpfropf durchsetzt wird. Der Kontaktierungsvorsprung kann sehr einfach dadurch hergestellt werden, dass die die Durchbrechung überdeckende Leiterbahnstruktur durchstoßen wird, wobei Abschnitte der Leiterbahnstruktur nach innen in die Durchbrechung umgebogen werden und sich zweckmäßigerweise an der Wandung der Durchbrechung anlegen.

Nachfolgend wird die Erfindung anhand der beiliegenden Zeichnung näher erläutert. In dieser zeigen:
- Fig. 1 bis 6: verschiedene Verfahrensschritte für die Herstellung eines vorteilhaft ausgebildeten Verdrahtungsträgers des Piezoventils, und
- Fig. 7: ein unter Verwendung des vorgenannten Verdrahtungsträgers aufgebautes Piezoventil bevorzugten Aufbaus.

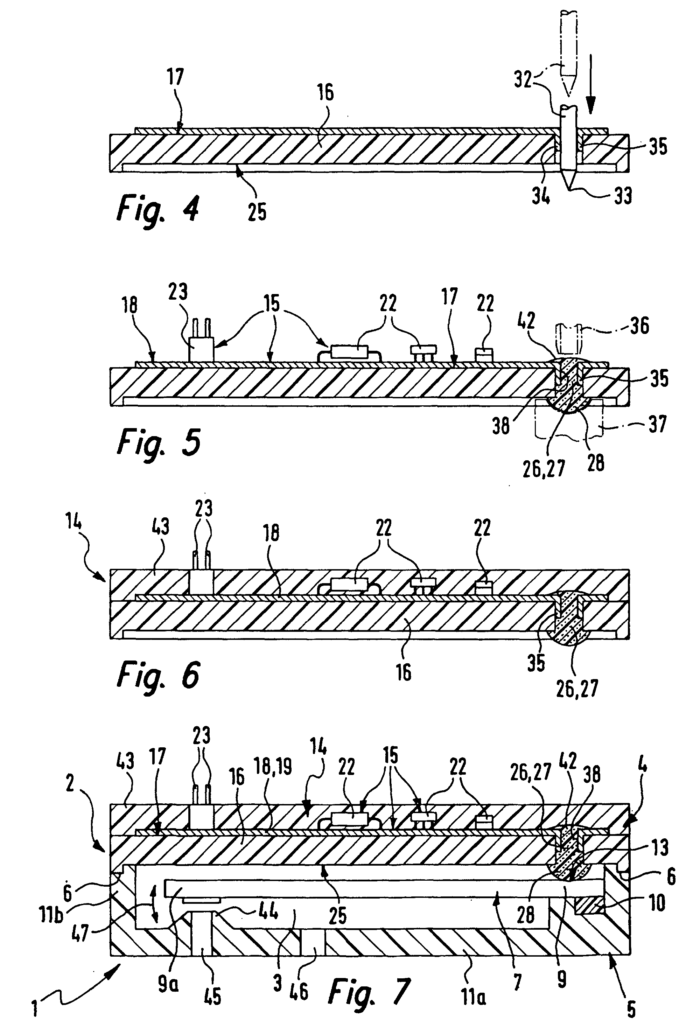

Die Fig. 7 zeigt ein allgemein mit Bezugsziffer 1 bezeichnetes Piezoventil. Dieses dient zur Steuerung der Strömung eines Fluides, wobei es sich bei dem Fluid um ein hydraulisches oder um ein gasförmiges Medium handeln kann, vorzugsweise um Druckluft.

Das Piezoventil 1 verfügt über ein Ventilgehäuse 2, das einen Innenraum definiert, der eine Ventilkammer 3 bildet. Es handelt sich beim Ausführungsbeispiel um ein zweiteiliges Ventilgehäuse 2 mit einem ersten Gehäuseteil 4 und einem zweiten Gehäuseteil 5, wobei diese Gehäuseteile 4, 5 an einem Fügebereich 6 aneinandergesetzt und, beispielsweise durch Verkleben oder Verschweißen, unter Abdichtung fest miteinander verbunden sind.

In der Ventilkammer 3 des Ventilgehäuses 2 befindet sich mindestens ein elektrischer Piezo-Biegewandler 7, der das Betätigungsglied des Piezoventils bildet. Der Piezo-Biegewandler 7 verfügt über einen an sich bekannten Aufbau mit länglicher Gestalt. Er besteht aus piezoelektrischem Material; insbesondere Piezo-Keramik, und hat vorzugsweise einen mehrschichtigen Aufbau.

Der Piezo-Biegewandler 7 ist mit seinem rückwärtigen Endbereich 9 an dem zweiten Gehäuseteil 5 mittels geeigneter Befestigungsmittel fixiert. Beim Ausführungsbeispiel ist er durch Klebstoff gehalten.

An der dem ersten Gehäuseteil 4 zugewandten Seite ist der Piezo-Biegewandler 7 am rückwärtigen Endbereich 9 mit wenigstens einer elektrisch leitfähigen Kontaktfläche 13 versehen, über die die elektrische Betätigungsenergie zum Piezo-Biegewandler 7 übertragen wird. Die Kontaktfläche 13 ist beispielsweise Bestandteil einer Leiterbahn.

Das zweite Gehäuseteil 5 hat einen Boden 11a und eine vom Boden 11a zum ersten Gehäuseteil 4 hin wegragende umlaufende Seitenwand 11b, durch die eine Vertiefung definiert wird, in der sich der Piezo-Biegewandler 7 befindet.

Das erste Gehäuseteil 4 bildet einen Deckel des Gehäuses 2 und ist an dem Fügebereich 6 fluiddicht an die dem Boden 11a _{,} abgewandte Stirnfläche der Seitenwand 11b angesetzt, so dass die Ventilkammer 3 gebildet wird.

Dem vorderen Endbereich 9a des Piezo-Biegewandlers 7 liegt an der dem Boden 11a des zweiten Gehäuseteils 5 zugewandten Unterseite ein Ventilsitz 44 gegenüber, der die Öffnung eines in die Ventilkammer 3 einmündenden ersten Ventilkanals 45 umgrenzt. Ein weiterer Ventilkanal 46 mündet an anderer Stelle in die Ventilkammer 3 ein. Durch elektrische Aktivierung kann der Piezo-Biegewandler 7 zu einer durch einen Doppelpfeil angedeuteten Schaltbewegung 47 veranlasst werden, im Rahmen derer er sich durch Verbiegen an den Ventilsitz 44 annähert bzw. von dem Ventilsitz 44 entfernt. Es ist insbesondere möglich, den Piezo-Biegewandler 7 wahlweise in der in Fig. 7 gezeigten, vom Ventilsitz 44 abgehobenen Offenstellung oder einer am Ventilsitz 44 anliegenden und dadurch den ersten Ventilkanal 45 verschließenden Schließstellung zu positionieren. Dadurch ist eine Fluidsteuerung derart möglich, dass ein Fluidübertritt zwischen den beiden Ventilkanälen 45, 46 wahlweise ermöglicht oder verhindert wird. Es handelt sich um eine 2/2-Ventilfunktion. Ohne weiteres kann das Piezoventil 1 aber auch mit einer anderen Ventilfunktionalität ausgestaltet sein, beispielsweise als 3/2-Wegeventil, wobei dann mindestens ein weiterer Ventilkanal in die Ventilkammer 3 einmündet.

Beim Ausführungsbeispiel bildet der Piezo-Biegewandler 7 sowohl das Betätigungsglied als auch das Ventilglied des Piezoventils 1. Es ist jedoch auch eine Bauform möglich, bei der der Piezo-Biegewandler lediglich die Funktion des Betätigungsgliedes übernimmt und bei seiner Aktivierung mittelbar oder unmittelbar auf ein gesondertes Ventilglied einwirkt, um dieses nach Wunsch zu betätigen und zu positionieren.

Das erste Gehäuseteil 4 bildet eine Außenwand des Ventilgehäuses 2 und ist von einem Verdrahtungsträger 14 gebildet. Dieser ist mit einer insgesamt mit Bezugsziffer 15 bezeichneten Verdrahtungsanordnung ausgestattet, unter deren Vermittlung die Übertragung der elektrischen Betätigungssignale zu dem Piezo-Biegewandler 7 stattfindet.

Im Einzelnen verfügt der Verdrahtungsträger 14 über einen aus Kunststoffmaterial bestehenden Trägerkörper 16, der beim Ausführungsbeispiel plattenartig ausgebildet ist und der an dem Fügebereich 6 die Verbindung zu dem zweiten Gehäuseteil 5 herstellt. Konkret wird hier also die Ventilkammer 3 von dem zweiten Gehäuseteil 5 und dem Trägerkörper 16 begrenzt.

Die Verdrahtungsanordnung 15 befindet sich an der der Ventilkammer 3 abgewandten Außenseite 17 des Ventilträgers 16. Sie enthält elektrische Leiter 18, die in Heißprägetechnik als bevorzugt folienartig dünne Leiterbahnstrukturen 19 auf den Trägerkörper 16 aufgebracht sind. Ferner enthält die Verdrahtungsanordnung 15 mehrere mit den elektrischen Leitern 18 verlötete Elektronikkomponenten 22. Darüber hinaus ist die Verdrahtungsanordnung 15 auch noch mit elektrischen Anschlusskontakten 23 ausgestattet, die ebenfalls mit den elektrischen Leitern 18 elektrisch verbunden sind.

Die Verdrahtungsanordnung 15 steht durch den Trägerkörper 16 hindurch mit der mindestens einen Kontaktfläche 13 des Piezo-Biegewandlers 7 in elektrischer Verbindung. Zu diesem Zweck ist der Trägerkörper 16 mit mindestens einer Durchbrechung 24 versehen - beim Ausführungsbeispiel sind zwei nebeneinanderliegende Durchbrechungen vorhanden -, die von der Außenseite 17 zu der die Ventilkammer 3 begrenzenden Innenseite 25 des Trägerkörpers durchgeht und die jeweils von einer elektrisch leitenden Durchkontaktierung 26 durchsetzt ist. Die Durchkontaktierung 26 ist zum einen mit der Verdrahtungsanordnung 15 kontaktiert und zum anderen, im Bereich der Innenseite 25 des Trägerkörpers 16, mit der ihr zugeordneten Kontaktfläche 13 des Piezo-Biegewandlers 7. Jeder Durchkontaktierung 26 ist eine eigene Kontaktfläche 13 zugeordnet.

Die Durchkontaktierung 26 ist von einem elektrisch leitfähigen Elastikpfropf 27 gebildet. Bei diesem handelt es sich insbesondere um einen elektrisch leitfähigen Elastomer- oder Gummikörper, wobei die gewünschten Eigenschaften - elektrische Leitfähigkeit und zugleich gummielastische Verformbarkeit - vorzugsweise dadurch realisiert werden, dass man ein gümmielastisches Material verwendet, in das eine Vielzahl elektrisch leitfähiger Metallpartikel eingebettet ist.

Der Elastikpfropf 27 besitzt an der Innenseite 25 des Trägerkörpers 16 einen vom Trägerkörper 16 wegragenden, ähnlich einem Bump gestalteten Kontaktierungskopf 28. Bevorzugt hat der Kontaktierungskopf 28 eine pilz- oder linsenförmige Gestalt. Dieser drückt gegen die zugeordnete Kontaktfläche 13 der elektrischen Komponente 7, wobei er zumindest geringfügig elastisch verformt wird, so dass sich auf Grund der Gummielastizität eine gewisse federnde Vorspannung ergibt.

Man wird das Piezoventil 1 zweckmäßigerweise so auslegen, dass beim Zusammenfügen der beiden Gehäuseteile 4, 5 die Kontaktfläche 13 am zugeordneten Kontaktierungskopf 28 zur Anlage gelangt, bevor die endgültige zusammengefügte Position der beiden Gehäuseteile 4, 5 erreicht wird. Daraus resultiert das gewünschte gegenseitige Anpressen mit entsprechend sicherer, großflächiger elektrischer Verbindung.

Gleichzeitig erreicht man damit einen große Bereiche abdeckenden zuverlässigen Toleranzausgleich. Die elastische Verformbarkeit des Elastikpfropfes 27 stellt ungeachtet der Bauteiltoleranzen eine sichere elektrische Verbindung zur Verfügung. Man erreicht also eine elektrische Kontaktierung mit gleichzeitigem Toleranzausgleich. Hinzu kommt, dass seitens des Verdrahtungsträgers 14 als für die Kontaktierung verantwortliche Komponente unmittelbar eine Durchkontaktierung 26 herangezogen wird, so dass auch insoweit kein gesonderter Herstellungsprozess erforderlich ist.

Der Kontaktierungskopf 28 ist bevorzugt so ausgebildet, dass er im Vergleich zu der von ihm durchsetzten Durchbrechung 24 einen größeren Querschnitt besitzt und den Trägerkörper 16 am Rand der Durchbrechung formschlüssig übergreift. Dadurch wird zum einen die mögliche Kontaktierungsfläche vergrößert. Zum anderen erzielt man aber auch eine formschlüssige Fixierung des Elastikpfropfes 27 am Trägerkörper 16, die ein ungewolltes Entweichen des Elastikpfropfes 27 aus der Durchbrechung 24 zur ersten Seite 17 hin verhindert. Somit ist der Elastikpfropf 27 auch dann sicher verankert, wenn bei einer entsprechenden Anwendung in der Ventilkammer 3 ein relativ großer Innendruck herrscht

Zugleich ist der Elastikpfropf 27 in der Lage, einen fluiddichten Kontakt mit dem Trägerkörper 16 einzugehen. Dies lässt sich sehr einfach dadurch erreichen, dass der Elastikpfropf 27 unter elastischer Vorspannung in der Durchbrechung 24 einsitzt und unter Vorspannung an der Wandung der Durchbrechung 24 anliegt oder dass das Material des Elastikpfropfes 27 an den Trägerkörper 16 fest angeformt ist. Somit ist sichergestellt, dass durch die Durchbrechung 24 hindurch kein in der Ventilkammer 3 befindliches Fluid entweichen kann.

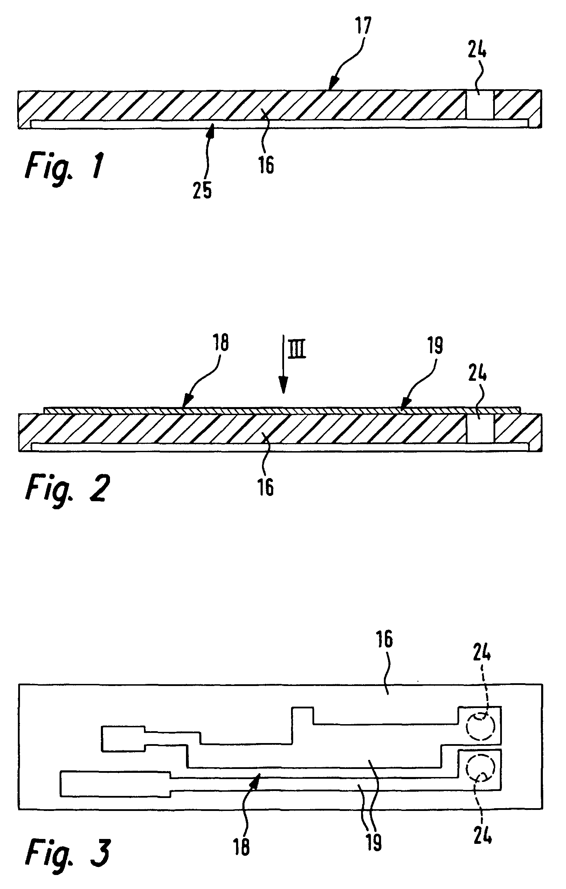

Im Folgenden wird anhand der Fig. 1 bis 6 ein bevorzugtes Herstellungsverfahren für den Verdrahtungsträger 14 erläutert, wobei aber auch weitere vorteilhafte Ausgestaltungsmerkmale des Verdrahtungsträgers 14 aufgezeigt werden.

Bei der Herstellung des Verdrahtungsträgers 14 wird zunächst der in Fig. 1 separat dargestellte Trägerkörper 16 bereitgestellt. Er wird aus Kunststoffmaterial gefertigt, vorzugsweise durch Spritzgießen. Beim Gießvorgang, oder auch anschließend im Rahmen einer spanenden Bearbeitung, wird in den Trägerkörper 16 die gewünschte Anzahl von Durchbrechungen 24 für die Durchkontaktierungen 26 eingebracht.

In einem nächsten Schritt werden die elektrischen Leiter 18 der Verdrahtungsanordnung 15 an der Außenseite 17 des Trägerkörpers 16 aufgebracht. Dies geschieht zweckmäßigerweise dadurch, dass man eine wunschgemäß gestaltete Leiterbahnstruktur 19 durch Heißprägetechnik an der Außenseite 17 des Trägerkörpers 16 aufbringt. Diese Leiterbahnstruktur 19 ist dabei so gestaltet, dass sie die jeweils mit einer Durchkontaktierung 26 zu versehende Durchbrechung 24 überdeckt, wie dies aus Fig. 2 und der eine Draufsicht gemäß Pfeil III der Fig. 2 zeigenden Fig. 3 hervorgeht.

Der Trägerkörper 16 bildet somit gemeinsam mit den auf ihm aufgebrachten Komponenten der Verdrahtungsanordnung 15 einen in Prägetechnik realisierten MID-Körper ("Molded Interconnect Device").

In einem nächsten Verfahrensschritt wird die Leiterbahnstruktur 19 im Bereich einer jeweiligen Durchbrechung 24 von der Außenseite 17 her mit einem geeigneten Dorn 32 durchstoßen (Fig. 4). Dabei taucht der Dorn 32 in die Durchbrechung 24 ein, zweckmäßigerweise bis er an der zweiten Seite 25 wieder austritt.

Damit die Leiterbahnstruktur 19 sauber durchstochen wird, verfügt der Dorn 32 an der Vorderseite zweckmäßigerweise über eine geeignete Spitze 33. Er läuft vorzugsweise kegelförmig zu.

Beim Durchstoßen der Leiterbahnstruktur 19 werden die die Durchstoßungsstelle umgrenzenden Abschnitte 34 der Leiterbahnstruktur 19 nach innen in die Durchbrechung 24 hinein umgebogen, wobei sie sich ringsum an die Wandung der Durchbrechung 24 anlegen. Zweckmäßigerweise entspricht der Durchmesser des Dorns 32 der Differenz aus dem Durchmesser der Durchbrechung 24 und der zweimaligen Dicke der Leiterbahnstruktur 19. Man kann jedoch auch einen etwas größeren Querschnitt des Dorns 32 vorsehen, um eine gewisse Quetschung des umgebogenen Leiterbahnmaterials zu erzielen und somit ein optimales Anschmiegen an die Wandung der Durchbrechung 24 mit gleichzeitiger Glättung eventuell auftretender Falten.

Der Durchstoßungsvorgang ist in Fig. 4 illustriert. Nach dem Durchstoßen wird der Dorn 32 aus der Durchbrechung 24 wieder herausgezogen, wobei die umgebogenen Abschnitte 34 als in die Durchbrechung 24 koaxial hineinragender rohrstutzenartiger Kontaktierungsvorsprung 35 verbleiben. Dieser ist ein einstückiger Bestandteil der Leiterbahnstruktur 19.

Das Durchstoßen der Leiterbahnstruktur 19 zum Zwecke der Herstellung des ringförmigen Kontaktierungsvorsprunges 25 kann auch unmittelbar beim Aufprägen der Leiterbahnstruktur 19 stattfinden.

Als nächstes werden die Elektronikkomponenten 22 und die elektrischen Anschlusskontakte 23 auf der Außenseite 17 des Trägerkörpers 16 platziert und durch gängige Lötverfahren oder sonstige geeignete Verbindungsmaßnahmen mit der Leiterbahnstruktur 19 elektrisch verbunden und zugleich fixiert. Damit ist die Verdrahtungsanordnung 15 fertiggestellt. Ersichtlich ist dieser Zustand in der Fig. 5.

Die Verdrahtungsanordnung 15 ist insbesondere so ausgebildet, dass sie eine Ansteuerelektronik für den mindestens einen, in der Ventilkammer 3 untergebrachten Piezo-Biegewandler 7 bildet. Die Ansteuerelektronik ist zweckmäßigerweise zumindest als Lade-/Entladeelektronik ausgeführt, die die für die Aktivierung des Piezo-Biegewandlers erforderliche Betätigungsspannung erzeugt und bei Deaktivierung für den gewünschten Abfluss der elektrischen Ladungen sorgt. Die Betätigungsspannung liegt vorzugsweise unter 60 Volt, vorzugsweise bei 24 Volt. Bei Bedarf kann die Verdrahtungsanordnung auch einen ASIC bilden oder enthalten.

Als nächstes wird nun der die Durchkontaktierung 26 bildende, elektrisch leitfähige Elastikpfropf 27 in der betreffenden Durchbrechung 24 appliziert. Dies geschieht bevorzugt dadurch, dass man mit Hilfe einer Spritzvorrichtung 36 ein elektrisch leitfähiges Material in flüssigem oder pastösem Zustand von der Außenseite 17 her dosiert in die betreffende Durchbrechung 24 einbringt. Dabei wird durch ein an der Innenseite 25 im Bereich der Austrittsöffnung der Durchbrechung 24 platziertes Formgebungswerkzeug 37 zum einen verhindert, dass die Materialmasse unkontrolliert ausfließt, und zum anderen die für den Kontaktierungskopf 28 gewünschte, bevorzugt kuppenartige Form vorgegeben.

Das derart eindosierte Material lässt man anschließend aushärten, bis es den gewünschten gummielastischen Endzustand erreicht hat. Eventuell wird hierzu Energie zugeführt.

Bei dieser Art der Herstellung des Elastikpfropfes 27 wird eine optimale stoffschlüssige Verbindung zwischen dem Elastikmaterial einerseits und dem Trägerkörper 16 sowie dem Kontaktierungsvorsprung 35 andererseits gewährleistet.

Es besteht jedoch die alternative Möglichkeit, als Elastikpfropf einen separat vorgefertigten Elastikkörper vorzusehen, der über die gewünschten Eigenschaften verfügt und der im Rahmen eines Steckvorganges in die Durchbrechung 24 eingesteckt ist. Hier werden die Abmessungen des Elastikpfropfes 27 zweckmäßigerweise so gewählt, dass er eingepresst werden muss und auf diese Weise ein fester Halt erreicht wird.

Durch den rohrstutzenartigen Kontaktierungsvorsprung 35 wird ein eine verhältnismäßig große axiale Länge aufweisender Kontaktierungsdurchgang 38 definiert, der eine zuverlässige Kontaktierung des Elastikpfropfes 27 mit der Leiterbahnstruktur 19 gewährleistet. Prinzipiell wäre es jedoch auch möglich, den Kontaktierungsdurchgang 38 durch einfaches Ausstanzen oder sonstiges Einbringen eines Loches in die Leiterbahnstruktur 19 im Bereich der Durchbrechung 24 vorzusehen. Um aber auch in diesem Falle eine sichere Kontaktierung zu gewährleisten, ist es empfehlenswert, auch im Bereich der Außenseite 17 einen, weiteren, Kontaktierungskopf 42 des Elastikpfropfes 27 vorzusehen, der die Leiterbahnstruktur 29 im Umfangsbereich des Kontaktierungsdurchganges 38 übergreift. Eine solche Maßnahme ist jedoch auch bei dem gezeigten Ausführungsbeispiel von Vorteil.

Nachdem der Elastikpfropf 27 installiert ist, wird an der Außenseite 17 des Trägerkörpers 16 zweckmäßigerweise noch eine Vergussmasse 43 aufgebracht, die im ausgehärteten Zustand eine Schutzhülle für die Verdrahtungsanordnung 15 bildet, wobei lediglich die elektrischen Anschlusskontakte 23 herausragen.

Der somit fertiggestellte Verdrahtungsträger 14 kann nun mit der weiteren Ventilgehäusekomponente 5 vereinigt werden, um das Piezoventil 1 fertigzustellen. An den elektrischen Anschlusskontakten 23 können wegführende elektrische Leiter angeschlossen werden, die für die Signal- und Energieübertragung zwischen der Verdrahtungsanordnung 15 und einer externen Einrichtung, beispielsweise einem elektronischen Steuergerät, dienen können.

Mit der geschilderten Anordnung und Verfahrensweise lässt sich eine gleichzeitige Kontaktierung, Fixierung, Klemmung und gegebenenfalls Abdichtung von mehreren Bauteilen, Bauelementen und Systemen mittels nur einer Komponente bei gleichzeitigem Toleranzausgleich der einzelnen zu kontaktierenden und miteinander zu verbindenden Komponenten erzielen. Es können nun auch erstmals heißgeprägte MID-Verdrahtungsträger mit Durchkontaktierungen versehen werden. Sowohl aktive als auch passive Komponenten und Systeme lassen sich miteinander verbinden. Etwaige Bauteiltoleranzen gleichen sich durch die elastische Bump-Struktur (Kontaktierungskopf 28) vollkommen aus. Mit dem mindestens einen Kontaktierungskopf 28 - beim Ausführungsbeispiel sind zwei Durchkontaktierungen und somit zwei Kontaktierungsköpfe 28 vorhanden - kann der vorzugsweise als piezokeramischer Multilayeraktor ausgeführte Piezo-Biegewandler 7 nicht nur kontaktiert, sondern auch fixiert werden. Der mindestens eine Kontaktierungskopf 28 drückt den rückwärtigen Endbereich 9 des Piezo-Biegewandlers gegen das zweite Gehäuseteil 5, so dass er festgeklemmt wird. Auf diese Weise ist eine kostengünstige Montage von piezokeramischen Aktoren mit der ansteuernden Elektronik durch einen einfachen Fügeprozess möglich.

Ein weiterer Vorteil des multifunktionalen Kontaktelementes (Elastikpfropf 27) ist die gleichzeitige Abdichtfunktion zur Abdichtung der mit Fluid beaufschlagten Ventilkammer 3 gegen die außen am Trägerkörper 16 angeordnete Ansteuerelektronik.

Ein weiterer Vorteil liegt darin, dass durch die Kontaktierungsköpfe (Bumps) eine weitgehende Unabhängigkeit von der räumlichen Struktur der aneinander zu fixierenden und zu kontaktierenden Bauteile erreicht wird. Somit ist es auch unproblematisch, gekrümmte Komponenten zu kontaktieren, zu fixieren und zu klemmen.

## Patentansprüche

1. Piezoventil, mit einem Ventilgehäuse (2), das eine Ventilkammer (3) definiert, die mindestens ein Betätigungsglied in Gestalt eines Piezo-Biegewandlers (7) enthält, dem für seine elektrische Kontaktierung mindestens eine einer Außenwand des Ventilgehäuses (2) zugewandte Kontaktfläche (13) zugeordnet ist, **dadurch gekennzeichnet, dass** die vorgenannte Außenwand als Verdrahtungsträger (14) ausgebildet ist, der einen aus Kunststoffmaterial bestehenden Trägerkörper (16) aufweist, der an der der Ventilkammer (3) entgegengesetzten Außenseite (17) eine für die elektrische Ansteuerung des Piezo-Biegewandlers (7) vorgesehene, über elektrische Leiter (18) und/oder Elektronikkomponenten (22) verfügende Verdrahtungsanordnung (15) trägt, die über mindestens eine eine Durchbrechung (24) des Trägerkörpers (16) durchsetzende Durchkontaktierung (26) mit dem Piezo-Biegewandler (7) elektrisch kontaktiert ist, indem die Durchkontaktierung (26) aus einem elektrisch leitfähigen Elastikpfropf (27) besteht, gegen den die dem Piezo-Biegewandler (7) zugeordnete mindestens eine Kontaktfläche (13) im Bereich der Innenseite (25) des Trägerkörpers (16) angepresst ist.

2. Piezoventil nach Anspruch 1, **dadurch gekennzeichnet, dass** die Verdrahtungsanordnung (15) eine Ansteuerelektronik für den mindestens einen Piezo-Biegewandler (7) bildet und insbesondere eine Lade-/Entladeelektronik aufweist.

3. Piezoventil nach Anspruch 1 oder 2, **dadurch gekennzeichnet, dass** der Verdrahtungsträger (14) einen Deckel des Ventilgehäuses (2) bildet.

4. Piezoventil nach einem der Ansprüche 1 bis 3, **dadurch gekennzeichnet, dass** der Elastikpfropf (27) ein elastisch leitfähiger Elastomer- oder Gummikörper ist.

5. Piezoventil nach einem der Ansprüche 1 bis 4, **dadurch gekennzeichnet, dass** der Elastikpfropf (27) aus gummielastischem Material mit eingebetteten, elektrisch leitfähigen Partikeln, zweckmäßigerweise Metallpartikel oder metallisierte Kunststoffpartikel, besteht.

6. Piezoventil nach einem der Ansprüche 1 bis 5, **dadurch gekennzeichnet, dass** der Elastikpfropf (27) aus in flüssigem oder pastösem Zustand in die Durchbrechung (24) eindosiertem und anschließend zu gummielastischen Eigenschaften ausgehärtetem Material besteht.

7. Piezoventil nach einem der Ansprüche 1 bis 5, **dadurch gekennzeichnet, dass** der Elastikpfropf (27) ein im vorgefertigten Zustand in die Durchbrechung (24) eingesetzter Elastikkörper ist.

8. Piezoventil nach einem der Ansprüche 1 bis 7, **dadurch gekennzeichnet, dass** der Elastikpfropf (27) an der dem Piezo-Biegewandler (7) zugewandten Innenseite des Trägerkörpers (16) einen den elektrischen Kontakt mit der zugeordneten Kontaktfläche herstellenden und über den Trägerkörper (16) vorstehenden Kontaktierungskopf (28) aufweist.

9. Piezoventil nach Anspruch 8, **dadurch gekennzeichnet, dass** der Kontaktierungskopf (28) im Vergleich zur Durchbrechung (24) einen größeren Querschnitt besitzt und den Trägerkörper (16) am Rand der Durchbrechung (24) übergreift.

10. Piezoventil nach einem der Ansprüche 1 bis 9, **dadurch gekennzeichnet, dass** der Trägerkörper (16) mit zumindest Teilen der Verdrahtungsanordnung (15) als MID-Körper ("Molded Interconnect Device") ausgebildet ist.

11. Piezoventil nach einem der Ansprüche 1 bis 10, **dadurch gekennzeichnet, dass** die Verdrahtungsanordnung (15) über elektrische Leiter (18) verfügt, die in Heißprägetechnik als Leiterbahnstrukturen (19) auf dem Trägerkörper (16) aufgebracht sind.

12. Piezoventil nach einem der Ansprüche 1 bis 11, **dadurch gekennzeichnet, dass** mindestens ein mit einem Elastikpfropf (27) kontaktierter elektrischer Leiter der Verdrahtungsanordnung (15) als Leiterbahnstruktur (19) an der ersten Seite (17) des Trägerkörpers (16) angeordnet ist und über einen mit der zugeordneten Durchbrechung (24) fluchtenden Kontaktierungsdurchgang (38) verfügt, der von einem von umgebogenen Abschnitten (34) der Leiterbahnstruktur (19) gebildeten und koaxial in die Durchbrechung (24) hineinragenden rohrstutzenartigen Kontaktierungsvorsprung (35) definiert wird, der von dem elektrisch leitfähigen Elastikpfropf (27) durchsetzt ist.

13. Piezoventil nach Anspruch 12, **dadurch gekennzeichnet, dass** der Kontaktierungsvorsprung (35) von beim lokalen Durchstoßen der Leiterbahnstruktur (19) umgebogenen Abschnitten (34) der Leiterbahnstruktur (19) gebildet ist.

14. Piezoventil nach einem der Ansprüche 1 bis 13, **dadurch gekennzeichnet, dass** der elastisch leitfähige Elastikpfropf (27) die zugeordnete Durchbrechung (24) des Trägerkörpers (16) mit Dichtkontakt durchsetzt.

15. Piezoventil nach einem der Ansprüche 1 bis 14, **gekennzeichnet durch** einen plattenartigen Trägerkörper (16), dessen zwei einander entgegengesetzten größerflächigen Seiten die Außenseite (17) und Innenseite (25) bilden.

16. Piezoventil nach einem der Ansprüche 1 bis 15, **dadurch gekennzeichnet, dass** auf der Außenseite (17) des Trägerkörpers (16) eine die Verdrahtungsanordnung (15) umschließende Vergussmasse (43) angeordnet ist, aus der zweckmäßigerweise elektrische Anschlusskontakte (23) herausragen.

## Claims

1. Piezoelectric valve with a valve casing (2) defining a valve chamber (3) containing at least one actuating element in the form of a piezoelectric bending transducer (7) to which is assigned, for its electrical contacting, one or more contact areas (13) facing an outer wall of the valve casing (2), **characterised in that** the aforementioned outer wall of the valve casing is designed as a wiring support (14) with a support body (16) made of plastic material and carrying on the outer side (17) opposite the valve chamber (3) a wiring arrangement (15) with electrical conductors (18) and/or electronic components (22) and provided for the electrical control of the piezoelectric bending transducer (7), and which is electrically contacted by the piezoelectric bending transducer (7) through at least one feed-through (26) passing through an opening (24) in the support body (16), while the feed-through (26) comprises an electrically conductive elastic stopper (27) against which the contact area (13) or areas assigned to the piezoelectric bending transducer (7) is or are pressed in the area of the inside (25) of the support body (16).

2. Piezoelectric valve according to claim 1, **characterised in that** the wiring arrangement (15) forms a control electronics unit for the piezoelectric bending transducer or transducers (7) and in particular has charge/discharge electronics.

3. Piezoelectric valve according to claim 1 or 2, **characterised in that** the wiring support (14) forms a cover of the valve casing (2).

4. Piezoelectric valve according to any of claims 1 to 3, **characterised in that** the elastic stopper (27) is an electrically conductive elastomer or rubber body.

5. Piezoelectric valve according to any of claims 1 to 4, **characterised in that** the elastic stopper (27) is made of rubber-elastic material containing embedded electrically conductive particles, expediently metal particles or metallized plastic particles.

6. Piezoelectric valve according to any of claims 1 to 5, **characterised in that** the elastic stopper (27) is made of material fed into the opening (24) in liquid or paste-like condition and subsequently cured to have rubber-elastic properties.

7. Piezoelectric valve according to any of claims 1 to 5, **characterised in that** the elastic stopper (27) is an elastic body inserted into the opening (24) in prefabricated form.

8. Piezoelectric valve according to any of claims 1 to 7, **characterised in that** the elastic stopper (27) has on the inside of the support body (16) facing the piezoelectric bending transducer (7) a contacting head (28) making electrical contact with the assigned contact area and extending beyond the support body (16).

9. Piezoelectric valve according to claim 8, **characterised in that** the contacting head (28) has a larger cross-section than the opening (24) and overlaps the support body (16) at the edge of the opening (24).

10. Piezoelectric valve according to any of claims 1 to 9, **characterised in that** the support body (16), together with at least parts of the wiring arrangement (15), is in the form of an MID body ("moulded interconnect device").

11. Piezoelectric valve according to any of claims 1 to 10, **characterised in that** the wiring arrangement (15) has electrical conductors (18), applied to the support body (16) as conductor path structures (19) by hot embossing.

12. Piezoelectric valve according to any of claims 1 to 11, **characterised in that** at least one electrical conductor of the wiring arrangement (15) contacted by an elastic stopper (27) is arranged as a conductor path structure (19) on the first side (17) of the support body (16) and has a contacting passage (38) aligned with the assigned opening (24) and defined by a pipe-socket-like contacting projection (35) formed by bent-over sections (34) of the conductor path structure (19) and extending coaxially into the opening (24) and through which the electrically conductive elastic stopper (27) passes.

13. Piezoelectric valve according to claim 12, **characterised in that** the contacting projection (35) is formed by sections (34) of the conductor path structure (19) bent over during localised piercing of the conductor path structure (19).

14. Piezoelectric valve according to any of claims 1 to 13, **characterised in that** the electrically conductive elastic stopper (27) passes through the assigned opening (24) of the support body (16) with sealing contact.

15. Piezoelectric valve according to any of claims 1 to 14, **characterised by** a plate-shaped support body (16) with its two larger-surface opposite sides forming the outside (17) and the inside (25).

16. Piezoelectric valve according to any of claims 1 to 15, **characterised in that** encapsulating material (43) enclosing the wiring arrangement (15), from which electrical connection contacts (23) expediently protrude, is provided on the outside (17) of the support body (16).

## Revendications

1. Piézo-soupape avec un boîtier de soupape (2) qui définit une chambre de soupape (3), laquelle contient au moins un organe d'actionnement sous la forme d'un piézo-convertisseur flexible (7) auquel est associée, pour sa mise en contact électrique, au moins une surface de contact (13) tournée vers une paroi extérieure du boîtier de soupape (2), **caractérisée en ce que** la paroi extérieure précitée est réalisée en tant que support de câblage (14) qui comporte un corps porteur (16) en matière plastique, lequel porte, sur le côté extérieur (17) opposé à la chambre de soupape (3), un agencement de câblage (15) prévu pour la commande électrique du piézo-convertisseur flexible (7) et disposant de conducteurs électriques (18) et/ou de composants électroniques (22), lequel agencement de câblage est en contact électrique avec le piézo-convertisseur flexible (7) par au moins une métallisation (26) traversant un ajour (24) du corps porteur (16), par le fait que la métallisation (26) est constituée d'un bouchon élastique (27) électriquement conducteur contre lequel la ou les surfaces de contact (13) affectées au piézo-convertisseur flexible (7) sont pressées contre la face intérieure (25) du corps porteur (16).

2. Piézo-soupape selon la revendication 1, **caractérisée en ce que** l'agencement de câblage (15) forme une électronique de commande pour le ou les piézo-convertisseurs flexibles (7) et comporte en particulier une électronique de charge/décharge.

3. Piézo-soupape selon la revendication 1 ou 2, **caractérisée en ce que** le support de câblage (14) forme un couvercle du boîtier de soupape (2).

4. Piézo-soupape selon l'une des revendications 1 à 3, **caractérisée en ce que** le bouchon élastique (27) est un corps en élastomère ou caoutchouc élastiquement conducteur.

5. Piézo-soupape selon l'une des revendications 1 à 4, **caractérisée en ce que** le bouchon élastique (27) est constitué d'une matière présentant l'élasticité du caoutchouc avec particules électriquement conductrices, avantageusement des particules métalliques ou particules plastiques métallisées, noyées dans le matériau présentant l'élasticité du caoutchouc.

6. Piézo-soupape selon l'une des revendications 1 à 5, **caractérisée en ce que** le bouchon élastique (27) est constitué d'un matériau introduit de manière dosée dans l'ajour (24) à l'état liquide ou pâteux, qui est ensuite durci pour présenter les propriétés élastiques du caoutchouc.

7. Piézo-soupape selon l'une des revendications 1 à 5, **caractérisée en ce que** le bouchon élastique (27) est un corps élastique inséré à l'état préfabriqué dans l'ajour (24).

8. Piézo-soupape selon l'une des revendications 1 à 7, **caractérisée en ce que** le bouchon élastique (27) comporte, sur la face intérieure tournée vers le piézo-convertisseur flexible (7) du corps porteur (16), une tête de mise en contact (28) réalisant le contact électrique avec la surface de contact associée et faisant saillie du corps porteur (16).

9. Piézo-soupape selon la revendication 8, **caractérisée en ce que** la tête de mise en contact (28) présente, par rapport à l'ajour (24), une plus grande section transversale et passe sur le corps porteur (16), sur le bord de l'ajour (24).

10. Piézo-soupape selon l'une des revendications 1 à 9, **caractérisée en ce que** le corps porteur (16) comporte au moins des parties de l'agencement de câblage (15) sous la forme de corps MID ("Molded Interconnect Device").

11. Piézo-soupape selon l'une des revendications 1 à 10, **caractérisée en ce que** l'agencement de câblage (15) comporte des conducteurs électriques (18) qui sont appliqués sur le corps porteur (16) par une technique d'empreinte à chaud, sous la forme de structures de pistes conductrices (19).

12. Piézo-soupape selon l'une des revendications 1 à 11, **caractérisée en ce qu'**au moins un conducteur électrique, en contact avec un bouchon élastique (27), de l'agencement de câblage (15), est disposé, en tant que structure de piste conductrice (19), sur le premier côté (17) du corps porteur (16) et comporte un passage de mise en contact (38) qui est aligné avec l'ajour (24) correspondant et qui est défini par une saillie de mise en contact (37) de type tubulure formée par des tronçons (34) recourbés de la structure de piste conductrice (19) et pénétrant coaxialement à l'intérieur de l'ajour (24), laquelle saillie de contact est traversée par le bouchon élastique (27) électriquement conducteur.

13. Piézo-soupape selon la revendication 12, **caractérisée en ce que** la saillie de mise en contact (35) est formée par des tronçons (34) recourbés de la structure de piste conductrice (19), lorsque celle-ci est perforée à cet endroit.

14. Piézo-soupape selon l'une des revendications 1 à 13, **caractérisée en ce que** le bouchon élastique (27) élastiquement conducteur traverse l'ajour (24) associé du corps porteur (16), avec contact d'étanchéité.

15. Piézo-soupape selon l'une des revendications 1 à 14, **caractérisée par** un corps porteur (16) de type plaque dont deux faces opposés l'une à l'autre de grande surface forment la face extérieure (17) et la face intérieure (25).

16. Piézo-soupape selon l'une des revendications 1 à 15, **caractérisée en ce que** sur la face extérieure (17) du corps porteur (16) est disposée une masse de scellement (43) enfermant l'agencement de câblage (15), de laquelle dépassent avantageusement des contacts de connexion (23) électriques.
